# FASCICULE DE BREVET EUROPEEN

(11) **EP 1 709 827 B1**
(45) Date de publication et mention de la délivrance du brevet: **13.02.2008**
(21) Numéro de dépôt: 04804826.8
(22) Date de dépôt: 14.12.2004
(51) Int. Cl.: H04Q 7/32

(54) **Procédé de sécurisation de l'identitifiant d'un téléphone portable, et téléphone portable correspondant**
Verfahren zur Sicherung einer Mobiltelefonkennung und entsprechendes Mobiltelefon
Method of securing a mobile telephone identifier, and corresponding mobile telephone

(30) Priorité: 19.12.2003 FR 0315078
(43) Date de publication de la demande: 11.10.2006
(73) Titulaire: GEMPLUS, 13881 Gémenos Cedex (FR)
(72) Inventeur: BOURSIER, Carine, F-13400 Aubagne (FR); GIRARD, Pierre, F-13112 La Destrousse (FR)
(86) Numéro de dépôt international: PCT/EP2004/053469
(87) Numéro de publication internationale: WO 2005/069658

(56) Documents cités:
- DE-A- 10 026 326
- FR-A- 2 797 138

## Description

La présente invention porte sur les -combinés de téléphonie mobile, et plus particulièrement sur les techniques visant à réduire les possibilités de réutilisation d'un combiné volé.

Le vol de combinés de téléphonie portable est devenu un véritable problème de société. Les vols avec violence dans les lieux publics ont ainsi massivement augmenté ces dernières années du fait des vols de tels combinés. On peut par exemple estimer que le nombre -de téléphones portables volés en France durant l'année 2001 a été supérieur à 150 000. Pour combattre ces vols, les autorités françaises obligent dorénavant les opérateurs de téléphonie mobile à placer un identifiant des combinés volés sur une liste noire. Chaque combiné mobile présente une identification unique appelée IMEI (pour International Mobile Equipment Identity en langue anglaise) qui est transmise au réseau utilisé pour la communication. L'IMEI d'un combiné déclaré volé est ainsi placée dans une liste noire, qui .est déjà opérationnelle en France. Lorsqu'un combiné inscrit dans la liste tente de communiquer, ses communications peuvent être bloquées.

Cependant, l'IMEI est actuellement stockée sur une mémoire flash et mal sécurisée. En effet, des logiciels permettent de modifier l'IMEI d'un combiné et sont disponibles en masse sur internet. Ainsi, comme cela a été reconnu par la Commission Européenne, la mise en place de listes noires de combinés volés peut être contournée relativement aisément.

Une recommandation technique de l'ETSI propose de rendre l'IMEI inchangeable après le processus de fabrication du combiné. Cette recommandation a notamment été mise .en oeuvre en inscrivant l'IMEI dans une PROM, afin qu'elle ne puisse pas physiquement être modifiée.

Cette technique de sécurisation présente des inconvénients. En effet, l'IMEI est lue par le système d'exploitation du combiné. L'utilisation -de systèmes d'exploitation frauduleux permet ainsi de modifier l'IMEI de façon logicielle afin de fournir une IMEI modifiée au réseau.

Le document DE 100 26 326 expose un combiné selon le préambule de la revendication 1.

L'invention vise à résoudre ces inconvénients. L'invention a ainsi pour objet un combiné de téléphonie mobile comprenant :
- un support de stockage sécurisé contre les accès frauduleux, stockant l'IMEI du combiné ;
- un connecteur d'un module électronique sécurisé associé à un opérateur;
- un système d'exploitation du combiné, commandant l'authentification du support de stockage de l'IMEI par un module électronique sécurisé connecté au connecteur afin d'établir un canal de communication sécurisé entre le support de stockage et le module, et commandant la transmission de l'IMEI sur le canal sécurisé vers le module électronique sécurisé.

Selon une variante, le système d'exploitation commande la transmission de l'IMEI à un opérateur de téléphonie mobile par l'intermédiaire d'un canal sécurisé OTA.

Selon une autre variante, le combiné comprend un module électronique sécurisé associé à l'opérateur connecté dans le connecteur. Selon encore une variante, le module électronique sécurisé est une carte UICC.

On peut alors prévoir que le système d'exploitation commande l'authentification du module sécurisé par le support de stockage.

Selon une variante, le module électronique sécurisé et le support de stockage stockent des clés de cryptage adaptées pour sécuriser le canal de communication sécurisé.

Selon une autre variante, le module sécurisé bloque l'utilisation du combiné lors de la détection d'une IMEI falsifiée.

L'invention porte également sur un procédé de sécurisation de l'IMEI d'un combiné de téléphonie mobile, comprenant les étapes :
- d'authentification d'un support de stockage sécurisé du combiné mémorisant son IMEI, par un module électronique sécurisé associé à l'opérateur et inséré dans un connecteur du combiné, afin d'établir un canal sécurisé entre le support de stockage et le module sécurisé;
- de transmission de l'IMEI depuis le support de stockage jusqu'au module sécurisé par l'intermédiaire du canal sécurisé.

Selon une variante, le module sécurisé transmet en outre l'IMEI à un opérateur de téléphonie mobile par l'intermédiaire d'un canal sécurisé OTA.

Selon encore une variante, l'opérateur compare l'IMEI à une liste noire de combinés volés, -et bloque les communications du combiné lorsque le combiné appartient à la liste noire.

Selon une autre variante, le module sécurisé bloque l'utilisation du combiné lors de la détection d'une IMEI falsifiée.

D'autres particularités et avantages de l'invention apparaîtront clairement à la lecture de la description faite à titre d'exemple non limitatif et en regard des dessins annexés sur lesquels :
- la figure 1 représente des éléments mis en oeuvre selon une variante de l'invention ;
- la figure 2 représente un diagramme illustrant les échanges et étapes réalisés par des éléments selon une variante de l'invention.

L'invention propose d'utiliser un canal sécurisé afin de réaliser une authentification d'un support de stockage (sécurisé contre les accès frauduleux et mémorisant l'IMEI) par un module électronique sécurisé associé à l'opérateur et connecté dans le combiné mobile. Un tel module électronique sécurisé se présente typiquement sous la forme d'une carte UICC (pour Universal Integrated Circuit Card en langue anglaise) par exemple au format d'une carte SIM. L'IMEI n'est transmise sur le canal sécurisé que lorsque le support de stockage de l'IMEI a été authentifié.

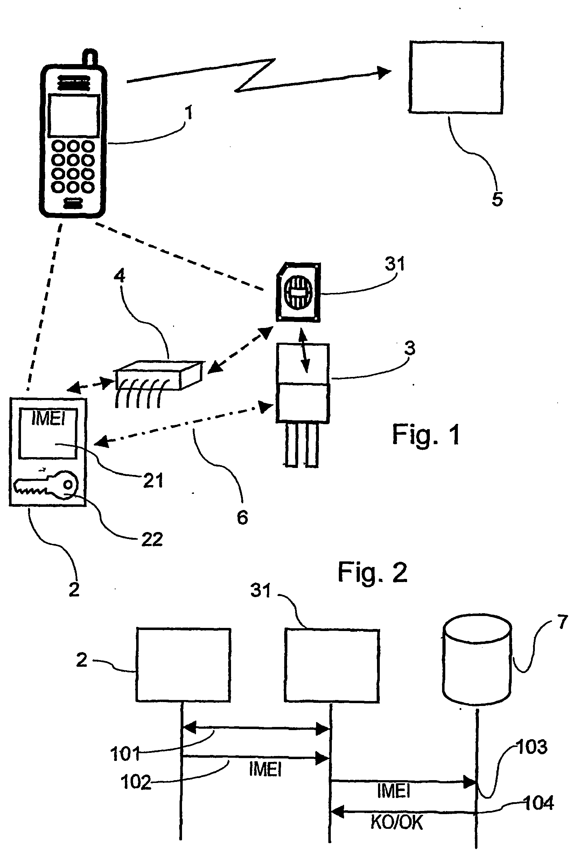

La figure 1 illustre ainsi un combiné de téléphonie mobile 1 selon l'invention. Le combiné 1 comprend un support de stockage 2 sécurisé contre les accès frauduleux. Ce support de stockage 2 stocke l'IMEI 21 du combiné 1. Le combiné 1 comprend en outre un connecteur 3 pour un module électronique sécurisé tel qu'une carte UICC 31. Un canal -de communication sécurisé 6 est établi entre le module électronique sécurisé 31 connecté dans le connecteur 3 et le support de stockage sécurisé 2. Le canal de communication sécurisé 6 signifie qu'au moins le module sécurisé authentifie le support de stockage 2 par tout moyen approprié et garantit l'intégrité et la confidentialité de toutes les données échangées. Un système d'exploitation 4 du combiné, commande l'authentification du support de stockage 2 de l'IMEI 21 par le module sécurisé 31 connecté dans le connecteur (identifié par l'étape 101 à la figure 2), et commande la transmission de l'IMEI sur le canal sécurisé 6 vers ce module sécurisé 31 (identifié par l'étape 102 à la figure 2).

L'IMEI est ainsi sécurisée contre les modifications dynamiques lors de sa transmission sur le canal de communication 6. On peut donc considérer que l'IMEI reçue par le module 31 est authentifiée car elle provient du support de stockage authentifié 2 et a été transmise par l'intermédiaire du canal de communication sécurisé 6.

Bien entendu, si l'authentification du support de stockage 2 de l'IMEI par le module électronique sécurisé 31 signale une erreur, ce module électronique 31 peut prendre toute mesure adaptée pour signaler cette erreur ou empêcher l'utilisation du combiné.

On peut ainsi bloquer le combiné sans avoir recours à une communication avec le réseau de l'opérateur. L'opérateur peut notamment éviter d'avoir à gérer les clés ou les certificats associés à un combiné. Un tel blocage est donc plus facile à mettre en oeuvre. Un tel blocage du téléphone peut également être réalisé sans nécessiter de modifications des réseaux des opérateurs : les infrastructures et protocoles du réseau existant peuvent ainsi être conservés.

Le support de stockage 2 sécurisé contre les accès frauduleux peut être d'un type connu, par exemple une PROM. L'intégrité statique de l'information qui y est inscrite est ainsi assurée.

Afin de sécuriser le canal 6 et de réaliser toute authentification voulue entre le support de stockage.2 et le module 31, le support .2 et/ou le module peuvent stocker des clés de cryptage adaptées au type de cryptage ou d'authentification souhaités. Des types de cryptage ou d'authentification utilisables sont connus en soi. On peut notamment prévoir d'utiliser des clés de session ou des clés statiques.

L'intégrité de l'IMEI peut être protégée par un calcul cryptographique qui serait transmis sur le canal sécurisé 6 au module sécurisé 31.

Le système d'exploitation 4 peut être mémorisé dans une mémoire ROM et exécuté par un microcontrôleur. Le système d'exploitation 4 établira de préférence un canal sécurisé entre le support 2 et le module sécurisé 31 au moment de l'initialisation du combiné de téléphonie, ou en préalable à un appel.

Le système d'exploitation 4 peut être configuré pour que le module sécurisé 31 authentifie le combiné et vérifie l'intégrité des données qui lui sont transmises. On peut également prévoir que le module sécurisé 31 soit authentifié par le support sécurisé 2 du mobile 1 et vérifie également l'intégrité des données qui lui sont transmises.

On peut également prévoir des moyens de calcul cryptographiques intégrés dans le module sécurisé 31.

L'utilisation des listes noires doit malgré tout être poursuivie pour prendre des mesures de blocage. L'IMEI peut notamment être transmise du module sécurisé vers le réseau de l'opérateur, éventuellement en utilisant un canal sécurisé entre le module sécurisé 31 et l'opérateur ou afin de comparer l'IMEI authentifiée à une liste noire et éventuellement obtenir une commande de blocage du combiné de la part du réseau. Dans l'exemple de la figure 2, l' IMEI est transmise à un serveur 7 à l'étape 103. Le serveur établit si cet IMEI est présente dans sa liste noire. A l'étape 104, le serveur transmet au combiné une indication de la présence ou non de l'IMEI dans la liste. Une indication de présence d'une IMEI dans la liste peut correspondre à une commande de blocage du combiné par le serveur. Le serveur peut bien entendu prendre toute autre mesure adéquate pour perturber l'utilisateur frauduleux. Le serveur peut notamment déconnecter le combiné du réseau de communication de l'opérateur ou commander au module sécurisé de cesser la génération de clés pour le combiné.

Plusieurs modes de transmission de l'IMEI peuvent être envisagés entre le module sécurisé et le réseau de l'opérateur.

Cette transmission peut notamment être effectuée par l'intermédiaire du réseau de communication de l'opérateur, destiné à transmettre les communications entre utilisateurs. Dans l'exemple de la figure 1, la transmission est effectuée entre le combiné et un opérateur 5 d'un réseau de communication.

La transmission s'effectuera plutôt par l'intermédiaire d'un canal sécurisé, afin d'accroître le niveau de sécurité de la transmission. On peut notamment utiliser le canal sécurisé OTA initialement destiné à transmettre des SMS sécurisés et notamment utilisé pour le transfert d'applets, vers le module sécurisé.

## Revendications

1. Combiné de téléphonie mobile (1) comprenant :
- un support de stockage (2) sécurisé contre les accès frauduleux, stockant l'identification IMEI (21) du combiné ;
- un connecteur (3) d'un module électronique sécurisé (31) associé à un opérateur; **caractérisé en ce qu**'il comprend en outre
- un système d'exploitation (4) du combiné (1), commandant l'authentification du support de stockage (2) de l' IMEI par un module électronique sécurisé connecté au connecteur afin d' étab3.ir un canal de communication sécurisé (6) entre le support de stockage et le module, et commandant la transmission de l' IMEI sur le canal sécurisé vers le module électronique sécurisé.

2. Combiné de téléphonie mobile (1) selon la revendication 1, **caractérisé en ce que** le système d'exploitation (4) commande la transmission de l'IMEI à un opérateur de téléphonie mobile (5) par l'intermédiaire d'un canal sécurisé OTA.

3. Combiné selon l'une quelconque des revendications précédentes, **caractérisé en ce qu'**il comprend un module électronique (31) sécurisé associé à l'opérateur connecté dans le connecteur. _ .

4. Combiné selon la revendication 3, **caractérisé en ce que** le module électronique sécurisé est une carte UICC.

5. Combiné selon la revendication 3 ou 4, **caractérisé en ce que** le système d'exploitation commande l'authentification du module sécurisé par le support de stockage.

6. Combiné selon la revendication 5, **caractérisé en ce que** le module électronique sécurisé .et le support de stockage stockent des clés de cryptage (22) adaptées pour sécuriser le canal de communication sécurisé (6).

7. Combiné selon l'une quelconque des revendications 3 à 6, -**caractérisé en ce que** le module sécurisé (31) bloque l'utilisation du combiné lors de la détection d'une IMEI falsifiée.

8. Procédé de sécurisation de l'identification IMEI d'un ;combiné de tél-éphonie mobile (1), **caractérisé par** les étapes ;
- d'authentification d'un support de stockage sécurisé du combiné mémorisant son IMEI (21), par un module électronique sécurisé (31) associé à l'opérateur et inséré dans un connecteur (3) du -combiné, afin d'établir un canal sécurisé entre le support de stockage et le module sécurisé;
- de transmission de l'IMEI (21) depuis le support de stockage jusqu'au module sécurisé par l'intermédiaire du canal sécurisé.

9. Procédé selon la revendication 8, **caractérisé en ce que** le module sécurisé (31) transmet en outre l'IMEI à un opérateur de téléphonie mobile par l'intermédiaire d'un canal sécurisé OTA.

10. Procédé selon la revendication 9, **caractérisé en ce que** l'opérateur compare l'IMEI à une liste noire (7) de combinés volés, et bloque les communications du combiné lorsque le combiné appartient à la liste noire.

11. Procédé selon l'une quelconque des revendications 8 à 10, **caractérisé en ce que** le module sécurisé bloque l'utilisati-on du combiné lors de la détection d'une IMEI falsifiée.

## Claims

1. Mobile telephone handset (1) comprising:
- a storage medium (2) secured against fraudulent access, containing the IMEI (21) identifier of the handset;
- a connector (3) of a secure electronic module (31) associated with an operator; **characterised in that** it also comprises
- a handset (1) operating system (4) controlling the authentication of the IMEI storage medium (2) by a secure electronic module connected to the connector in order to establish a secure communication channel (6) between the storage medium and the module, and controlling the transmission of the IMEI over the secure channel towards the secure electronic module.

2. Mobile telephone handset (1) according to claim 1, **characterised in that** the operating system (4) controls the transmission of the IMEI to a mobile telephone operator (5) over a secure OTA channel.

3. Handset according to any one of the preceding claims, **characterised in that** it comprises a secure electronic module (31) associated with the operator connected to the connector.

4. Handset according to claim 3, **characterised in that** the secure electronic module is a UICC card.

5. Handset according to claim 3 or 4, **characterised in that** the operating system controls the authentication of the secure module by the storage medium.

6. Handset according to claim 5, **characterised in that** the secure electronic module and the storage medium store encryption keys (22) adapted to secure the secure communication channel (6).

7. Handset according to any one of the claims from 3 to 6, **characterised in that** the secure module (31) blocks the use of the handset when it detects a forged IMEI.

8. Method of securing the IMEI identifier of a mobile telephone handset (1), **characterised by** the steps of:
- authenticating a secure storage medium of the handset containing its IMEI (21), by means of a secure electronic module (31) associated with the operator and inserted in a connector (3) of the handset, in order to establish a secure channel between the storage medium and the secure module;
- transmitting the IMEI (21) from the storage medium to the secure module over the secure channel.

9. Method according to claim 8, **characterised in that** the secure module (31) also transmits the IMEI to a mobile telephone operator over a secure OTA channel.

10. Method according to claim 9, **characterised in that** the operator compares the IMEI with a blacklist (7) of stolen handsets and blocks the communications of the handset when the handset appears in the blacklist.

11. Method according to any one of the claims from 8 to 10, **characterised in that** the secure module blocks the use of the handset when it detects a forged IMEI.

## Patentansprüche

1. Mobiltelefon (1) das folgende Teile umfasst:
- Einen gegen betrügerische Zugriffe gesicherten Speicher (2), der die IMEI (21) des Mobiltelefons speichert;
- Einen Verbinder (3) eines gesicherten elektronischen Moduls (31) in Verbindung mit einem Anbieter, **dadurch gekennzeichnet, daß** es ferner umfaßt:
- Ein Betriebssystem (4) des Mobiltelefons (1), das die Authentifizierung des Speichers (2) der IMEI durch ein gesichertes elektronisches Modul steuert, das am Verbinder angeschlossen ist, um einen gesicherten Kommunikationskanal (6) zwischen dem Speicher und dem Modul herzustellen, und das die Übertragung der IMEI auf dem gesicherten Kanal an das gesicherte elektronische Modul steuert.

2. Mobiltelefon (1) nach Anspruch 1, **dadurch gekennzeichnet, daß** das Betriebssystem (4) die Übertragung der IMEI en einen Telefonanbieter (5) vermittels eines gesicherten Kanals OTA steuert.

3. Mobiltelefon nach einem beliebigen der vorstehenden Ansprüche, **dadurch gekennzeichnet, daß** es ein gesichertes elektronisches Modul (31) in Verbindung mit dem Anbieter umfaßt, das an den Verbinder angeschlossen ist.

4. Mobiltelefon nach Anspruch 3, **dadurch gekennzeichnet, daß** das gesicherte elektronische Modul eine UICC Karte ist.

5. Mobiltelefon nach Anspruch 3 oder 4, **dadurch gekennzeichnet, daß** das Betriebssystem die Authentifizierung des gesicherten Moduls durch den Speicher befiehlt.

6. Mobiltelefon nach Anspruch 5, **dadurch gekennzeichnet, daß** das gesicherte elektronische Modul und der Speicher die Geheimschlüssel (22) speichern, die geeignet sind, um den gesicherten Kommunikationskanal (6) zu sichern.

7. Mobiltelefon nach einem beliebigen der vorstehenden Ansprüche 3 bis 6, **dadurch gekennzeichnet, daß** das gesicherte Modul (31) die Benutzung des Mobiltelefons sperrt, wen eine gefälschte IMEI festgestellt wird.

8. Verfahren zur Sicherung der IEMI Identifizierung eines Mobiltelefons (1), das durch folgende Schritte **gekennzeichnet** ist:
- Die Authentifizierung eines gesicherten Speichers des Mobiltelefons, der dessen IMEI (21) durch ein gesichertes elektronisches Modul (31) in Verbindung mit dem Telefonanbieter speichert, und der in eine Buchse des Mobiltelefons eingesetzt wird, um einen gesicherten Kanal zwischen dem Speicher und dem gesicherten Modul herzustellen;
- Die Übertragung der IMEI (21) ab dem Speicher bis zum gesicherten Modul vermittels des gesicherten Kanals;

9. Verfahren nach Anspruch 8, **dadurch gekennzeichnet, daß** das gesicherte Modul (31) außerdem die IMEI vermittels eines gesicherten Kanals OTA an einen Telefonanbieter überträgt.

10. Verfahren nach Anspruch 9, **dadurch gekennzeichnet, daß** der Anbieter die IMEI mit einer schwarzen Liste (7) der gestohlenen Mobiltelefone vergleicht und die Verbindungen des Mobiltelefons sperrt, wenn das Mobiltelefon auf de schwarzen Liste verzeichnet ist.

11. Verfahren nach einem beliebigen der vorstehenden Ansprüche 8 bis 10, **dadurch gekennzeichnet, daß** das gesicherte Modul die Benutzung des Mobiltelefons sperrt, wenn eine gefälschte IMEI entdeckt wird.
